Europäisches Patentamt

European Patent Office

Office européen des brevets

(19)

(11) Veröffentlichungsnummer : **0 460 675 B1**

(12) **EUROPÄISCHE PATENTSCHRIFT**

(45) Veröffentlichungstag der Patentschrift :
**31.08.94 Patentblatt 94/35**

(21) Anmeldenummer : **91109305.2**

(22) Anmeldetag : **06.06.91**

(51) Int. Cl.⁵ : **G01C 19/72**

(54) Vorrichtung und Verfahren zur Messung absoluter Drehungen in mehreren Raumrichtungen.

(30) Priorität : **08.06.90 DE 4018397**

(43) Veröffentlichungstag der Anmeldung :
**11.12.91 Patentblatt 91/50**

(45) Bekanntmachung des Hinweises auf die
Patenterteilung :
**31.08.94 Patentblatt 94/35**

(84) Benannte Vertragsstaaten :
**AT BE CH DE DK ES FR GB GR IT LI NL SE**

(56) Entgegenhaltungen :
**EP-A- 0 288 032**

(73) Patentinhaber : **Alcatel SEL
Aktiengesellschaft
Lorenzstrasse 10
D-70435 Stuttgart (DE)**

(72) Erfinder : **Scholz, Joachim
Schellingweg 11
W-7142 Marbach a.N. (DE)**
Erfinder : **Oswald, Michael
Breslauer Strasse 5
W-7141 Schwieberdingen (DE)**

(74) Vertreter : **Pohl, Herbert, Dipl.-Ing et al
Alcatel SEL AG
Patent- und Lizenzwesen
Postfach 30 09 29
D-70449 Stuttgart (DE)**

## Beschreibung

Die Erfindung betrifft eine Vorrichtung und ein Verfahren zur Messung absoluter Drehungen in mehreren Raumrichtungen nach dem Oberbegriff des Patentanspruchs 1 bzw. dem Oberbegriff des Patentanspruchs 4. Eine derartige Vorrichtung ist aus der EP 0 288 032 A1, ein derartiges Verfahren auch aus der DE 29 41 618 C2 bekannt. Das bekannte, mit der bekannten Vorrichtung ausführbare Verfahren beruht auf der Ausnutzung des Sagnac-Effektes. Eine ausführliche Darstellung des Sagnac-Effektes findet sich in der Druckschrift: "Sagnac-Effekt" von E. J. Post in Reviews of Modern Physics 39, Nr. 2 (1967), Seite 475 bis 493. Da die physikalischen Grundlagen des Sagnac-Effektes nicht Gegenstand der Erfindung sind, wird im folgenden auf sie nicht näher eingegangen.

Bei dem bekannten Verfahren wird für jede Raumrichtung ein eigenes Ringinterferometer benutzt. Zur Messung von Drehraten in drei Raumrichtungen werden also drei Ringinterferometer gebraucht. Alle drei Ringinterferometer werden dabei aus einer einzigen Lichtquelle gespeist. Die Messung in die unterschiedlichen Raumrichtungen erfolgt im Zeitmultiplex-Verfahren. Die Ansteuerung der einzelnen Interferometer erfolgt in der Weise, daß der Lichtweg zu einem Interferometer nur dann geöffnet ist, wenn mit diesem Interferometer gemessen werden soll. Das bekannte Verfahren hat den Nachteil, daß die gesamte zu einem Interferometer fließende Lichtleistung geschaltet werden muß. Dies ist mit hohem Bedarf an Steuerleistung für die optischen Schalter und mit störenden Signalbeeinflussungen im Bereich des Schaltzeitpunktes verbunden.

Aufgabe der Erfindung ist es, eine Vorrichtung und ein Verfahren anzugeben, bei dem der Multiplex-Betrieb ohne das Schalten der Lichtwege durchgeführt wird. Gelöst wird diese Aufgabe durch eine Vorrichtung mit der Merkmalskombination des Patentanspruchs 1 und durch ein Verfahren mit der Merkmalskombination des Patentanspruchs 4. Die Unteransprüche enthalten Weiterbildungen und Ausgestaltungen der Erfindung.

Die erfindungsgemäße Vorrichtung hat den Vorteil, daß durch die Aktiv/Passiv-Schaltung der Modulatoren anstelle eines optischen Schalters sehr hohe Schaltfrequenzen möglich sind. Die Grenzwerte der Umschaltperiode sind durch die Modulationsfrequenz als oberem und die zeitliche Dynamik der zu messenden Drehrate als unterem Wert vorgegeben. Ein weiterer Vorteil liegt darin, daß durch die gemeinsame Steuer- und Auswerte-Elektronik Baugröße, Leistungsaufnahme und Kosten erheblich reduziert werden.

Ein Ausführungsbeispiel der Erfindung wird anhand der Figuren 1 bis 4 beschrieben und erläutert. Es zeigen:

Fig. 1 ein Interferometer für eine Raumrichtung,

Fig. 2 ein Interferometer gemäß der Erfindung für drei Raumrichtungen,

Fig. 3 eine Steuereinrichtung für ein Interferometer nach Fig. 2,

Fig. 4 Signalverläufe für ein Interferometer nach Fig. 2.

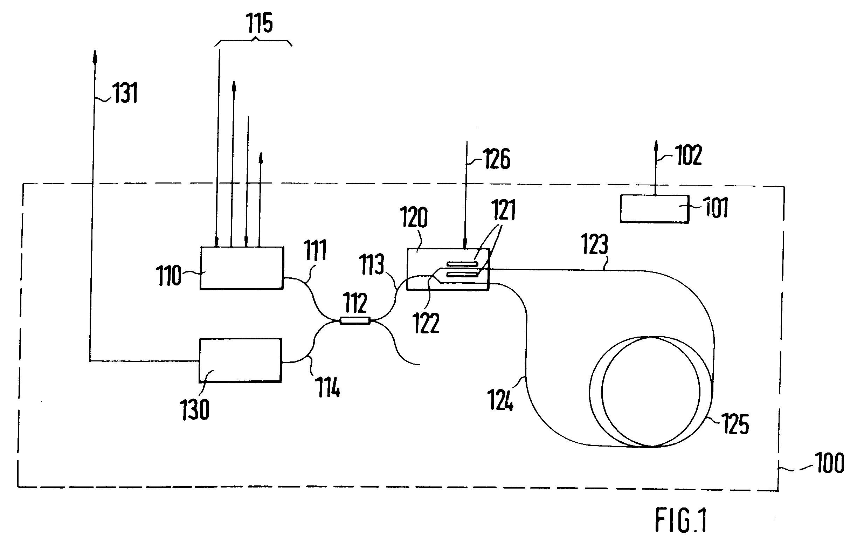

In Fig. 1 ist mit 100 ein Gehäuse bezeichnet, in dem eine Reihe zum Betrieb des Interferometers erforderlichen Elemente enthalten sind. Mit 101 ist ein Temperatursensor bezeichnet, der über eine mit 102 bezeichnete Leitung mit einer hier nicht weiter dargestellten Steuer- oder Verarbeitungseinrichtung verbunden ist. Mit 110 ist ein Source-Modul bezeichnet, das eine Laserdiode, einen Temperatursensor und ein Peltierelement enthält. Die zur Steuerung und Überwachung des Source-Moduls erforderlichen Verbindungen sind mit 115 bezeichnet. Das im Source-Modul 110 erzeugte Licht gelangt über eine Faser 111 zu einem Faserkoppler 112 und von dort über eine Faser 113 zu einem integrierten optischen Schaltkreis 120. Der intergrierte optische Schaltkreis 120 enthält einen Strahlteiler 122 und einen optischen Phasenmodulator 121. Der Phasenmodulator wird über eine mit 126 bezeichnete Leitung angesteuert. Vom Strahlteiler 122 aus durchläuft das Licht einen mit 125 bezeichneten, geschlossenen Lichtweg, bei Faserkreiseln eine aus einer Glasfaser hergestellte Spule. Über Spulenenden 123 und 124 gelangen die im Strahlteiler 122 erzeugten Teilstrahlen in den geschlossenen Lichtweg 125. Die beiden Teilstrahlen durchlaufen den Lichtweg in entgegengesetzter Richtung und interferieren im Strahlteiler 122. Bei Drehung des geschlossenen Lichtweges 125 senkrecht zur Achse des Lichtweges entsteht eine Phasenverschiebung zwischen den umlaufenden Teilstrahlen und damit eine Variation des Interferenzmusters. Ein mit 130 bezeichneter Detektor, dem über eine Faser 114 das am Strahlteiler 122 entstehende Interferenzmuster zugeführt wird, mißt die Intensität des Interferenzsignales. Durch Anlegen einer periodisch mit einer Frequenz f variierenden Phasenverschiebung zwischen den beiden den geschlossenen Lichtweg 125 durchlaufenden Teilstrahlen entsteht ein periodisches Ausgangssignal bei der Modulationsfrequenz. Eine Auswertung der Amplitude dieses Signales beispielsweise in einer später noch zu besprechenden Auswerteeinrichtung, die über eine mit 131 bezeichnete Leitung mit dem Detektor 130 verbunden ist, ergibt die Information über die Phasenverschiebung im Interferometer und damit über die Drehrate. Die bis jetzt beschriebenen Elemente und ihre Funktionsweise sind Stand der Technik und dem Fachmann auf dem Gebiet der Faserkreisel bekannt.

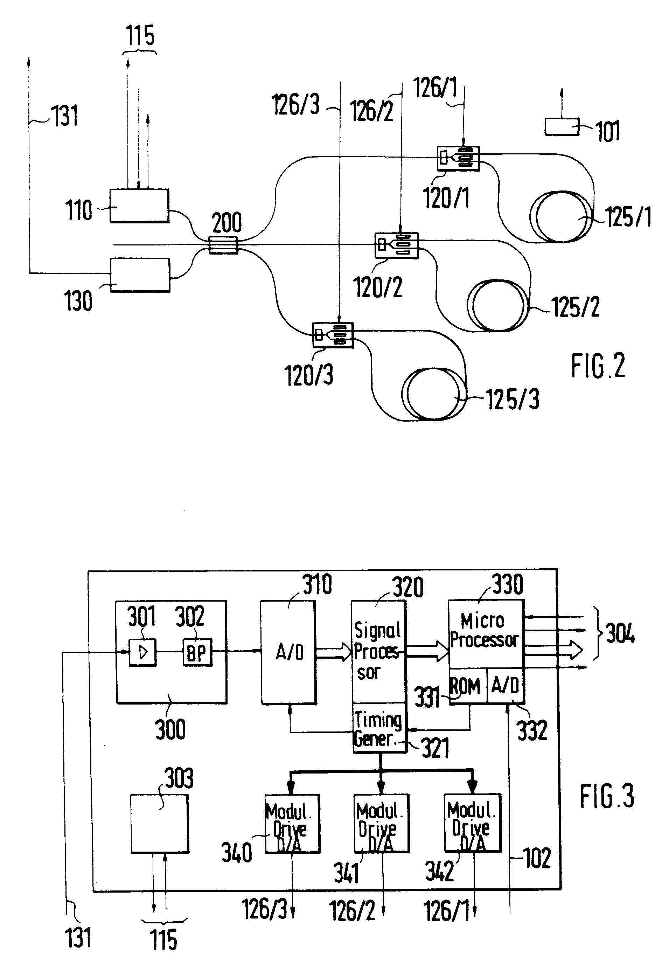

In Fig. 2 ist eine Einrichtung dargestellt, die nicht nur ein Interferometer, sondern deren drei enthält. Mit einer solchen Vorrichtung können also absolute Drehraten in drei verschiedenen Raumrichtungen gemessen werden. Im folgenden bezeichnen gleiche Bezugzeichen gleiche Elemente. Für alle drei geschlossenen Lichtwege 125/1, 125/2 und 125/3 ist ein einziges Source-Modul 110 vorhanden. Dessen Ausgangssignal wird in einem Koppler 200 auf die drei Interferometer aufgeteilt. Jedes Interferometer enthält einen integrierten optischen Schaltkreis. Die integrierten optischen Schaltkreise sind hier mit 120/1, 120/2 und 120/3 bezeichnet. Jeder dieser integrierten optischen Schaltkreise enthält einen Strahlteiler und einen elektro-optischen Phasenmodulator. Beides ist hier der übersichtlichkeit halber nicht mit Bezugzeichen versehen, erklärt sich aber aus der Zeichnung von selbst. Die elektrooptischen Modulatoren werden über Leitungen 126/1, 126/2 und 126/3 angesteuert. Am Ausgang des Detektormoduls 130 liegt dann ein periodisch sich veränderndes elektrisches Signal an.

In Fig. 3 ist mit 300 ein Eingangskreis bezeichnet, der einen Verstärker 301 und einen Bandpaß 302 enthält. Das Ausgangssignal des Eingangskreises 300 gelangt an einen Analog/Digitalwandler 310, dessen digitale Ausgangsseite mit einem Signalprozessor 320 verbunden ist. Der Signalprozessor 320 enthält einen Timing-Generator 321, der für die Steuerung von Zeitabläufen zuständig ist. Der Signalprozessor 320 ist mit einem Mikroprozessor 330 verbunden, der ein ROM 331 und einen Analog/Digitalwandler 332 enthält. Vom Timing-Generator 321 werden drei Treiber 340, 341 und 342 gesteuert. Diese drei Treiber versorgen die drei Modulatoren 120/1 bis 120/3 über die Leitungen 126/1 bis 126/3 mit Modulationssignalen. Der Signalprozessor 320 steuert für einen gewissen Zeitraum $T_u$ den Phasen-Modulator von jeweils einem Interferometer an und speichert die Ergebnisse der Auswertung in einem dem Interferometer zugeordneten digitalen Speicher ab, z.B. im Mikroprozessor 330. Anschließend wird der Modulator des nächsten Interferometers in Betrieb genommen, während die anderen beiden Modulatoren außer Betrieb gesetzt werden. Die Umschaltung der Modulation kann z.B. durch Umschaltung eines gemeinsamen Signalgenerators auf die verschiedenen Phasen-Modulatoren oder durch Ein- und Ausschalten der Generatoren der einzelnen Kreisel bewirkt werden. Das Multiplex-Verfahren kann mit Open-loop- und Closed-loop-Signalverarbeitung benutzt werden. Bei Closed-loop-Signalverarbeitung müssen die Ergebnisse der Signalverarbeitung jeweils beim Umschalten auf das nächste Interferometer bis zum nächsten Zyklus zwischengespeichert werden. Bisher noch nicht erwähnt wurde eine mit 303 bezeichnete Stromsteuerung für das Source-Modul 110. Die Stromsteuerung 303 ist über einen Teil der mit 115 bezeichneten Leitungen mit dem Source-Modul 110 verbunden. Der Mikroprozessor 330 steht über Leitungen 304 mit einer nicht näher bezeichneten Peripherie in Verbindung.

Typische Betriebswerte für die beschriebenen Interferometer sind:

| | |
|---|---|
| Faserlänge: | 100 m |
| Spulendurchmesser: | 80 mm |
| Modulationsfrequenz: | 1 MHz |
| Umschaltperiode der drei Sensoren: | 1 kHz |
| Meßzeit/Sensor/Periode: | 333 ms |

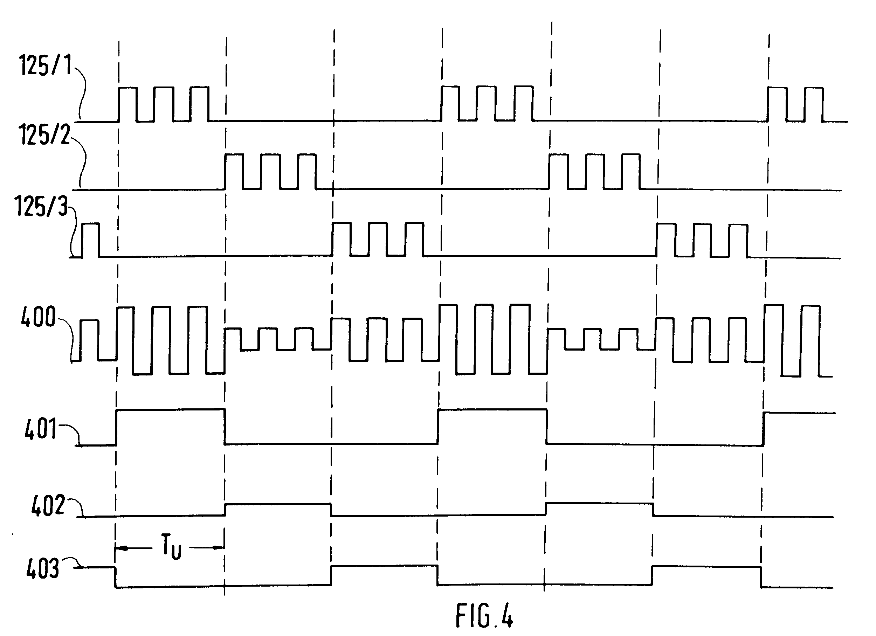

In Fig. 4 ist der zeitliche Verlauf von Signalen in den drei Interferometern 125/1, 125/2 und 125/3 dargestellt. Die oberste Zeile gibt die Modulation für das Interferometer 125/1, die Zeile darunter die Modulation für das Interferometer 125/2 und die dritte Zeile die Modulation für das Interferometer 125/3 wieder. Der Multiplexbetrieb besteht darin, daß immer dann, wenn der Modulator eines Interferometers aktiv ist, die Modulatoren der beiden anderen Interferometer passiv sind. Am Detektormodul 130 ergibt sich dann ein mit 400 bezeichneter Signalverlauf. Als Ausgangssignal der gesamten Einrichtung erhält man mit 401, 402 und 403 bezeichnete Signalverläufe. Der Signalverlauf 401 gehört zum Interferometer 125/1, der Signalverlauf 402 zum Interferometer 125/2 und der Signalverlauf 403 zum Interferometer 125/3. Da der Ansteuertakt für die einzelnen Modulatoren bekannt ist, lassen sich die Ausgangssignale den einzelnen Interferometern eindeutig zuordnen.

Die hier beschriebene Vorrichtung und das hier beschriebene Verfahren zum Zeitmultiplex-Betrieb von Interferometern beschrankt sich nicht nur auf Sagnac-Interferometer, sondern kann für den Zeitmultiplex-Betrieb beliebiger anderer Interferometer mit Phasenmodulation verwendet werden.

**Patentansprüche**

1. Vorrichtung zur Messung absoluter Drehungen in mehreren Raumrichtungen mit Hilfe des Sagnac-Effektes mit wenigstens einer Lichtquelle (110), wenigstens zwei im Zeitmultiplex betriebenen, Strahlenteiler (122) und optische Modulatoren (121) enthaltenden Interferometern, einem optischen Verteilelement (200) zur Weiterleitung von in der Lichtquelle erzeugten Lichtes auf die einzelnen Interferometer und einem Detektor (130),

**dadurch gekennzeichnet**, daß das optische Verteilelement (200) ein Strahlteiler ist, durch den das aus der Lichtquelle (110) stammende Licht in zu den Interferometern führende Teillichtströme aufgeteilt wird, und daß eine Steuereinrichtung (321, 340, ..., 342) vorgesehen ist, die die optischen Modulatoren der Interferometer im Zeitmultiplex ansteuert.

2. Vorrichtung nach Anspruch 1, gekennzeichnet durch elektrooptische Modulatoren (120/1, ..., 120/3) in integrierter Ausführung.

3. Vorrichtung nach Anspruch 1 oder 2, dadurch gekennzeichnet, daß jedem Interferometer eine Speichereinrichtung zugeordnet ist.

4. Verfahren zur Messung absoluter Drehungen in mehraran Raumrichtungen unter Ausnutzung des Sagnac-Effektes und unter Verwendung mehrerer, im Zeitmultiplex betriebener, optische Modulatoren (121) enthaltender Interferometer, welche Licht aus einer gemeinsamen Lichtquelle (110) zugeführt bekommen, und deren Ausgangssignale einem gemeinsamen Detektor (130) zugeführt werden, **dadurch gekennzeichnet**, daß der Zeitmultiplexbetrieb der Interferometer durch zeitabhängige Ansteuerung der optischen Modulatoren erreicht wird.

5. Verfahren nach Anspruch 4, dadurch gekennzeichnet, daß das die Interferometer durchlaufende Licht phasenmoduliert wird.

6. Verfahren nach Anspruch 4, dadurch gekennzeichnet, daß mit einem Interferometer gewonnene Meßergebnisse in einer diesem Interferometer zugeordneten Speichereinrichtung abgespeichert werden.

7. Verfahren nach Anspruch 6, dadurch gekennzeichnet, daß die einzelnen Interferometer in geschlossenen Regelschleifen betrieben werden.

8. Verfahren nach Anspruch 7, dadurch gekennzeichnet, daß Meßergebnisse der einzelnen Interferometer jeweils beim Umschalten des Meßbetriebes auf das nächste Interferometer gespeichert werden und bis zum nächsten Zyklus zwischengespeichert bleiben.

## Claims

1. A device for measuring absolute rotations in several directions in space using the Sagnac effect, comprising at least one light source (110), at least two interferometers operated in a time-division multiplex mode and containing beam splitters (122) and optical modulators (121), an optical distribution element (200) for transferring light generated in the light source to the individual interferometers, and a detector (130),
**characterized in** that the optical distribution element (200) is a beam splitter which divides the light coming from the light source (110) into separated beams which go to the interferometers, and that a driving facility (321, 340,...,342) is provided which drives the optical modulators of the interferometers in a time-division multiplex mode.

2. A device as claimed in claim 1, characterized by electrooptical modulators (120/1, ..., 120/3) realized using integrated circuit technology.

3. A device as claimed in claim 1 or 2, characterized in that each interferometer has a memory device associated therewith.

4. A method of measuring absolute rotations in several directions in space using the Sagnac effect and several interferometers which are operated in a time-division multiplex mode, contain optical modulators (121) and receive light from a common light source (110), and whose output signals are fed to a common detector (130), **characterized in** that the time-division multiplex operation of the interferometers is achieved by time control of the optical modulators.

5. A method as claimed in claim 4, characterized in that the light passing through the interferometers is phase-modulated.

6. A method as claimed in claim 4, characterized in that measurement results obtained with an interferometer are stored in a memory device associated with said interferometer.

7. A method as claimed in claim 6, characterized in that the individual interferometers are used in closed-loop systems.

8. A method as claimed in claim 7, characterized in that upon each changeover to the next interferometer, measurement results of the individual interferometers are stored until the next cycle.


**Revendications**

1. Dispositif de mesure de rotations absolues dans plusieurs directions de l'espace à l'aide de l'effet Sagnac, comportant au moins une source de lumière (110), au moins deux interféromètres exploités en multiplexage par répartition dans le temps et contenant des diviseurs de faisceau (122) et des modulateurs optiques (121), comportant aussi un élément de répartition optique (200) pour transmettre la lumière, produite dans la source de lumière, sur les différents interféromètres, ainsi qu'un détecteur (130),

    dispositif caractérisé par le fait que l'élément de répartition optique (200) est un diviseur de faisceau par lequel la lumière arrivant de la source de lumière (110) est répartie en courants lumineux partiels allant aux interféromètres et qu'est prévu un dispositif d'activation 321, 340, ..., 342) qui active en multiplexage par répartition dans le temps les modulateurs optiques des interféromètres.

2. Dispositif selon la revendication 1, caractérisé par des modulateurs électro-optiques (120/1, ..., 120/3) en réalisation intégrée.

3. Dispositif selon la revendication 1 ou 2, caractérisé par le fait qu'à chaque interféromètre correspond un dispositif de mémorisation.

4. Procédé de mesure de rotations absolues dans plusieurs directions de l'espace en utilisant l'effet Sagnac et en employant plusieurs interféromètres qui sont exploités en multiplexage par répartition dans le temps, contiennent des modulateurs optiques (121), reçoivent la lumière amenée d'une source de lumière commune (110) et dont les signaux de sortie sont fournis à un détecteur commun (130),

    caractérisé par le fait que l'exploitation des interféromètres en multiplexage par répartition dans le temps s'obtient par activation des modulateurs optiques en fonction du temps.

5. Procédé selon la revendication 4, caractérisé par le fait que la lumière qui traverse les interféromètres est modulée en phase.

6. Procédé selon la revendication 4, caractérisé par le fait que l'on mémorise les résultats de mesure, obtenus avec un interféromètre, dans un dispositif de mémorisation correspondant à cet interféromètre.

7. Procédé selon la revendication 6, caractérisé par le fait que les différents interféromètres sont exploités en boucles de régulation fermées.

8. Procédé selon la revendication 7, caractérisé par le fait que les résultats de mesure des différents interféromètres sont mis en mémoire lors de la commutation de l'exploitation de mesure sur l'interféromètre suivant et restent en mémoire intermédiaire jusqu'au cycle suivant.

FIG.1

FIG.2

FIG.3

FIG.4